# EUROPEAN PATENT SPECIFICATION

(11) **EP 0 906 698 B1**
(45) Date of publication and mention of the grant of the patent: **01.12.2004**
(21) Application number: 98903253.7
(22) Date of filing: 05.03.1998
(51) Int. Cl.: H04N 7/173

(54) **TRANSMISSION SYSTEM COMPRISING MEANS FOR TRANSMITTING A LOGO**
ÜBERTRAGUNGSSYSTEM MIT MITTELN ZUR ÜBERTRAGUNG EINES LOGOS
SYSTEME D'EMISSION COMPRENANT UNE UNITE PERMETTANT D'EMETTRE UN LOGO

(30) Priority: 01.04.1997 EP 97200944
(43) Date of publication of application: 07.04.1999
(73) Proprietor: Koninklijke Philips Electronics N.V., 5621 BA Eindhoven (NL); PHILIPS AB, 164 85 Stockholm (SE)
(72) Inventor: VAN GESTEL, Henricus, Antonius, Wilhelmus, NL-5656 AA Eindhoven (NL); STEENBEEK, Leonardus, Johannes, NL-5656 AA Eindhoven (NL)
(74) Representative: Schmitz, Herman Jan Renier
(86) International application number: PCT/IB1998/000271
(87) International publication number: WO 1998/044735

(56) References cited:
- US-A- 4 647 974
- US-A- 5 253 067
- US-A- 5 285 278

## Description

The invention relates to a transmission system including a transmitter and at least one receiver, the transmitter including means for transmitting operational signals for a predetermined operation mode of said receiver, and the receiver including means for processing said operational signals in said operation mode.

Transmission systems as referred to in the opening paragraph are generally known, inter alia, in the form of conventional radio or television transmission systems. In such systems, the operational signals are conventional radio or television signals. Also known are transmission systems in which operational signals are transmitted in addition to conventional signals so as to offer additional services or to enhance the operation of the receiver. For example, television transmitters transmit stereo sound signals, teletext pages, or electronic program guide information in addition to the normal television program. Television transmitters may also offer an opportunity for the public to actively participate in a television program. Radio transmitters transmit network information, traffic announcements, etc. in addition to the normal radio program.

It is not always clear to a user whether his receiver is equipped to process the operational signals. For example, conventional television receivers do not decode the operational signals which are transmitted along with an interactive television program and which define actions to be carried out by the receiver when a user actively participates, inter alia, by responding to questions in a quiz show or voting for the best performance in a song contest. If such an interactive program is announced to be broadcast, the owner of a modern but conventional receiver is confused about whether or not he can participate. Often, this results in nuisance calls to the service operator, receiver manufacturer or retailer. The confusion will further deteriorate in the near future when further new services will be introduced.

A typical aspect of this type of service is that the relevant operation mode is to be activated by the user. Needless to say that the user will be very frustrated if the service is announced to be available but his attempts to activate the relevant operation mode fail because the operational signals cannot be processed by his receiver.

It is an object of the invention to provide a transmission system by which the above-mentioned problems are alleviated.

To that end, the system is characterised in that the transmitter comprises means for transmitting a logo to indicate the transmission of the operational signals. The receiver comprises means for receiving the logo, comparing the received logo with a locally stored logo, enabling the predetermined operation mode only if the received and locally stored logos are perceptibly identical, and reproducing the logo at least in said operation mode.

A logo is herein understood to mean a picture and/or audio tune perceptible by a human. It is preferably designed such that it will be recognised by the public as being associated with a particular type of service.

The invention will be appreciated if it is considered that distinctive logos or audio tunes are easily recognised by the public. It is already common practice to print such logos on apparatuses to identify that they have certain capabilities. The invention extends this idea to the signal domain. By transmitting a logo, it becomes immediately clear to the public that the associated service is being broadcast. By means of the invention, it is achieved that receivers become operating only upon reception of the logo or tune for which they have been designed. New services require transmission of a different logo. Incompatible receivers will not respond to such services. The user will immediately understand that because the logo of "his" receiver is not being displayed (either the received, i.e. a different, logo will be displayed or no logo will be displayed at all). Accordingly, the public will not be bothered or confused.

The USA Patent publication 5,285,278 discloses an electronic redeemable coupon generating system which comprises an encoder for encoding coupon-related data in a television signal transmission, the transmission including picture information for display on a television monitor screen; a decoder for receiving the television signal transmission and extracting the coupon-related data therefrom; and a recording device for recording the extracted coupon-related data on a recording medium for subsequent readout and redemption. A logo is to appear on the TV screen when a message related to redeemable coupons is transmitted. The logo is mixed with video picture information by a video mixer, comprised by the encoder.

An additional advantage of the invention is the ability to easily trace broadcasters that offer services which are subject to payment of royalty fees, viz. by simply inspecting the logo. This advantage is further enhanced if the logo meets the requirements of being protectable by copyright and/or trademark law.

In an embodiment of the invention, the logo indicates the transmission format of the operational signals. The term transmission format is not restricted to the physical structure (such as modulation type or length of data bits) of the operational signals but also includes the application structure (such as the syntax of data items). It is envisaged that different standards for new services such as interactive television will coexist in the future. The logo not only indicates that an interactive program is broadcast, it also identifies the transmission format. With this embodiment, confusion is avoided as to whether or not a receiver is able to decode a transmitted service.

The logo may be separately encoded and transmitted in addition to conventional video or audio signals, e.g. in the vertical blanking interval of an analog television signal or as service information data packets in a digital television signal. The indicator may also be part of the conventional video or audio signal. In that case, the receiver comprises means for extracting the logo from said conventional video or audio signal.

In order to achieve that receivers indeed decode the transmitted logo and remain inoperative if the 'wrong' logo is received, the operational signals may be transmitted in scrambled form, using the logo as a scrambling key. The receiver is adapted to descramble the operational signals using the transmitted logo.
Fig.1 shows a schematic diagram of a transmission system in accordance with the invention.
Fig.2 shows a part of a television signal waveform including an audiovisual logo in accordance with the invention.
Figs. 3 and 4 show embodiments of a picture logo decoder which is shown in Fig.1.
Figs. 5 and 6 show further embodiments of the transmission system in accordance with the invention.

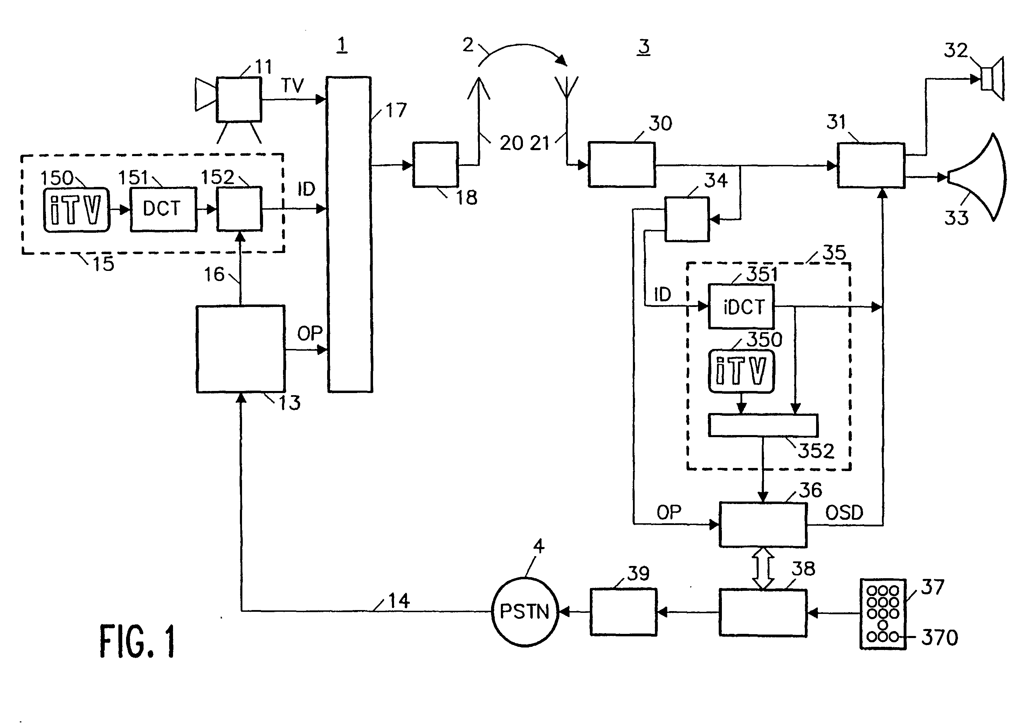

The invention will now be described with reference to an interactive television transmission system. Fig.1 shows a schematic diagram of such an interactive transmission system. The system comprises an interactive television transmitter **1**, a broadcast channel **2**, an interactive television receiver **3** and a backwards channel **4**. The broadcast channel **2** may also be a storage medium such as a magnetic tape or optical disc on which a television program is stored. The backwards channel **4** is here assumed to be the public switched telephone network (PSTN).

The transmitter 1 comprises a television program signal source, which is represented here by a television camera **11** generating a conventional television signal TV. The television program is supposed to be a quiz show in which the public may participate by sending answers to the questions. To that end, a computer system **13** generates operational signals OP in the form of data sequences defining messages to appear on screen and actions to be taken by the receivers in response to participation by the user. For example, the data sequences define a telephone number to be called by the receivers, identify how the user's response is to be encoded in the telephone call, and specify a time interval during which answers may be given. In the present embodiment, the operational signals OP are transmitted in a teletext-like manner in the vertical blanking interval of the television signal. In order to receive the phone calls from the public, the computer system **13** is coupled to the public switched telephone network **4** through telephone connections **14**. In accordance with the invention, the transmitter further comprises a picture logo generator **15** for transmitting an audiovisual picture logo ID. The transmitted logo ID indicates that an interactive television program is being broadcast. To that end, the picture logo generator **15** is controlled by the computer system **13** through a connection **16**. The television signal TV, identification signal ID, and operational signals OP are combined in a combiner stage **17** and collectively applied to a modulator **18** for RF transmission via an antenna **20**.

The logo generator **15** comprises a picture logo signal source **150** defining an artistic and aesthetically satisfying picture logo which has been designed to represent an interactive television program in accordance with a given standard. The logo has a dimension, inter alia, of **48** pixels horizontally and **32** pixels vertically occupying a small but perceptible portion of the display screen of a receiver. In order to save transmission capacity for transmitting the logo, the picture is encoded by a Discrete Cosine Transform (DCT) circuit **151** which is well known in the art of video coding and compression. Obviously, other methods of encoding the logo are also possible. The encoded picture is stored in a memory **152** and read out in response to a control signal from computer system **13** through connection **16**. It will be appreciated that encoding is to be performed only once in practice and may be done by external circuitry. The encoded picture is then once-only stored in the memory **152**.

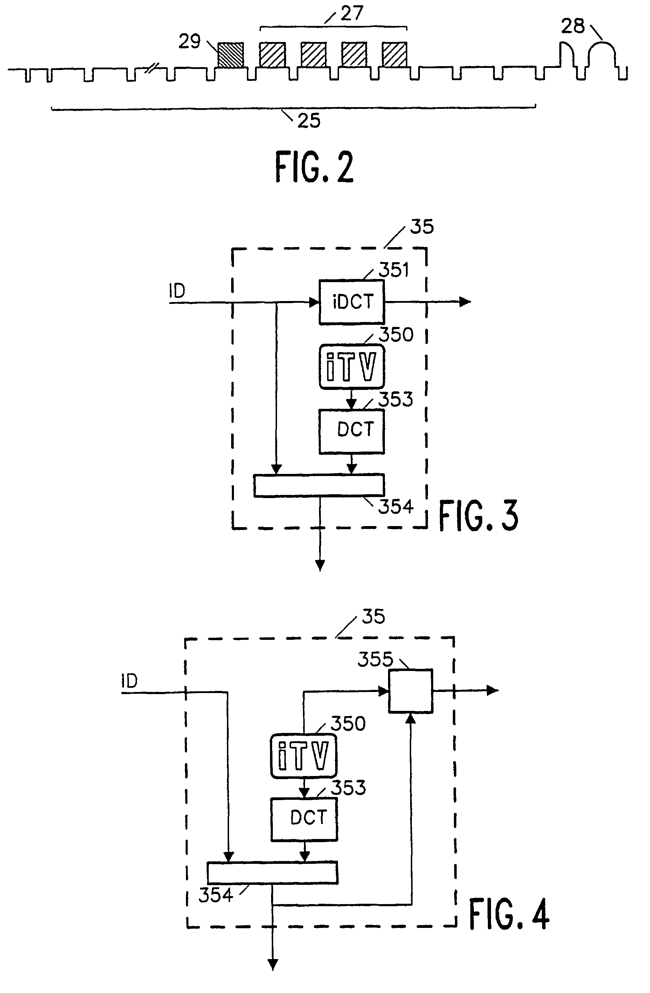

Fig.2 shows a part of the television signal waveform transmitted by the transmitter. Reference numeral **25** denotes the vertical blanking interval of the television signal which comprises, in a 625-line system, lines 6-22 of one field and lines 318-335 of the other field. Numeral **27** denotes the operational signals OP in the form of data packets which are transmitted if the television program is an interactive program. Numeral **29** denotes a data packet in which the encoded picture logo, i.e. the contents of memory **152** (see Fig.**1**), is accommodated. The other lines of the vertical blanking interval may be used for the transmission, inter alia, of conventional teletext signals. Numeral **28** denotes one of the lines of the active video interval conveying the conventional analog video signal.

Returning to Fig.**1**, the transmitted signal is received by the receiver **3** through an antenna **21** and demodulated by a tuner **30.** The tuner applies the demodulated baseband signal to conventional audio and video processing circuitry **31** to reproduce the TV program through a loudspeaker **32** and a display screen **33**. The baseband signal is further applied to a data slicer **34** which extracts the data embedded in the vertical blanking interval of the signal. The operational signals OP (**27** in Fig.2) are applied to a processing circuit **36** for processing in an interactive operation mode of the receiver. The processing circuit is controlled by a microprocessor **38** which receives user commands from a (remote) control unit **37** and is further coupled, via a modem **39**, to the telephone network **4**. The interactive operation mode is activated by the user in response to pressing a key **370** of the remote control unit **37**. In the interactive operation mode, the receiver is provided to generate on-screen-display signals OSD for display on the screen **33** and transmit user's responses back to the transmitter.

The logo data ID (**29** in Fig.2) is applied to a picture logo decoder **35** which comprises a logo memory **350**, an inverse Discrete Cosine Transform (iDCT) circuit **351**, and a comparator **352**. The iDCT circuit performs the inverse operation of DCT circuit **151** in the transmitter. Accordingly, it reconstructs the pixels forming the logo **150** transmitted by the transmitter. The received picture logo is applied to the display screen **33** for display together with the conventional television signal. The user is thus informed that the current television program is an interactive program. In response hereto, he may wish to activate the interactive operation mode of the receiver by pressing the key **370**.

The pixels from the iDCT circuit **351** are also applied to a comparator **352** which compares the received picture logo, on a pixel-by-pixel basis, with a picture logo that is locally stored in a memory **350** of the receiver. The comparator detects whether the received logo **150** and the stored logo **350** are substantially identical. Substantially identical means that both logos are perceptibly similar. For example, the comparator detects whether the mean square error between both pictures is below a certain threshold. The output of the comparator **352** is applied to an enable-input of the processing circuit **36**. The processing circuitry is enabled only when the received and the stored logo are identical. It will be appreciated that the enable signal may also be applied to the microprocessor. In any case, the user can only activate the interactive operation mode if both logos are perceptibly similar. If they are not similar, inter alia, because a service is offered which can not be processed by the receiver, the user will understand that in view of the fact that the displayed logo is different from the logo he is accustomed to.

Fig.3 shows a further embodiment of the picture logo decoder **35**. In this embodiment, the received and stored logos are compared in the frequency domain rather than the pixel domain. To that end, the stored logo **350** is encoded by a DCT circuit **353** which is the same as DCT circuit **151** at the transmitter end. The comparator **354** is now adapted to compare those transform coefficients that are considered to be characteristic of the logo. This is a less complicated task than comparing the logos on a pixel-by-pixel basis. For example, only the DC coefficients and some characteristic AC coefficients need to be compared. As already noted with respect to the transmitter, the logo can also be encoded externally, e.g. at the manufacturing stage, and then once-only stored in the receiver.

In both embodiments of the picture logo decoder **35**, the received logo is displayed irrespective of whether it matches the stored logo or not. Either one of the logos can be displaced, provided that they have been found to be similar. In such an embodiment, the user will only be alerted to the fact that the television program is interactive if his receiver is indeed compatible with the interactive transmission format. Fig.4 shows a modified version of the decoder **35** with which this is achieved. The picture logo decoder now includes a display generator **355** for displaying the stored logo **350** in response to the enabling output of comparator **354**.

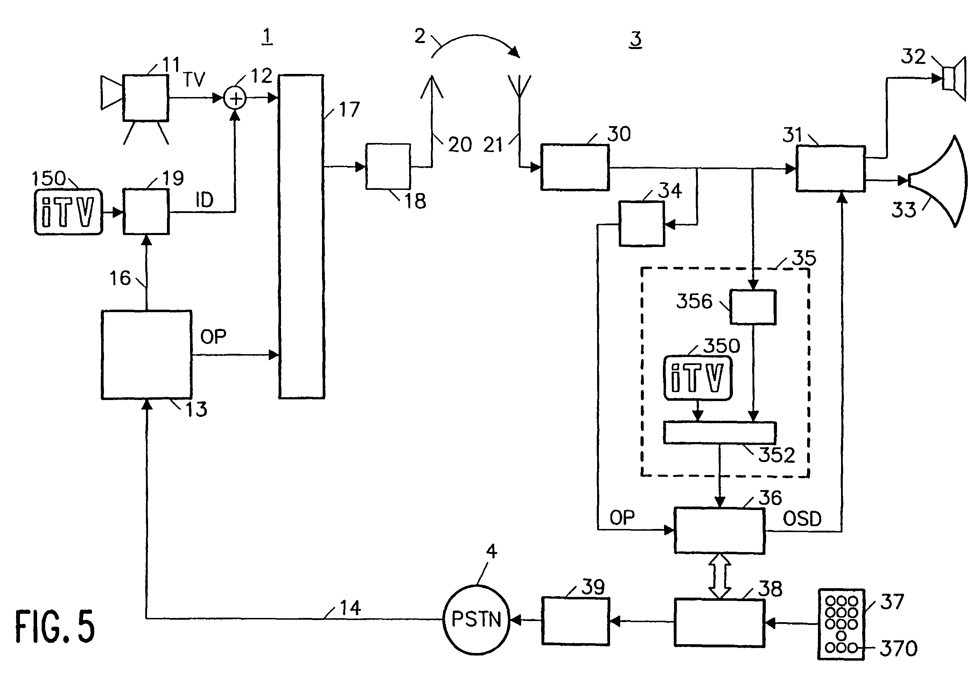

Fig.5 shows a further embodiment of an interactive transmission system in accordance with the invention. In this embodiment, the logo is embedded in the active video interval of the conventional television signal, i.e. in a visible manner. To that end, the picture logo signal source **150**, which in practice is a non-volatile memory in which the pixels are stored, is inserted in the conventional video signal TV through a switch **19** and an inserter **12.** The switch **19** is controlled by the computer **13** through the line **16** during the broadcast of an interactive program.

In this embodiment, the picture logo decoder **35** of the receiver **3** comprises means **356** for extracting the logo from the baseband video signal. Said means, basically including a timing window generator and a memory, can easily be designed by a person skilled in the art. The rest of the decoder (memory **350** locally storing the reference logo, and comparator **352** for comparing the received and stored logos) corresponds to the same elements shown in Fig.1. Its operation has already been described above. The embodiment shown in Fig.5 is particularly advantageous in digital television (e.g. MPEG2) systems in which the television signal including the transmitted logo is DCT encoded. In such a system, the comparison of transmitted and locally stored logos can easily be done in the frequency domain, viz. by comparing selected transform coefficients.

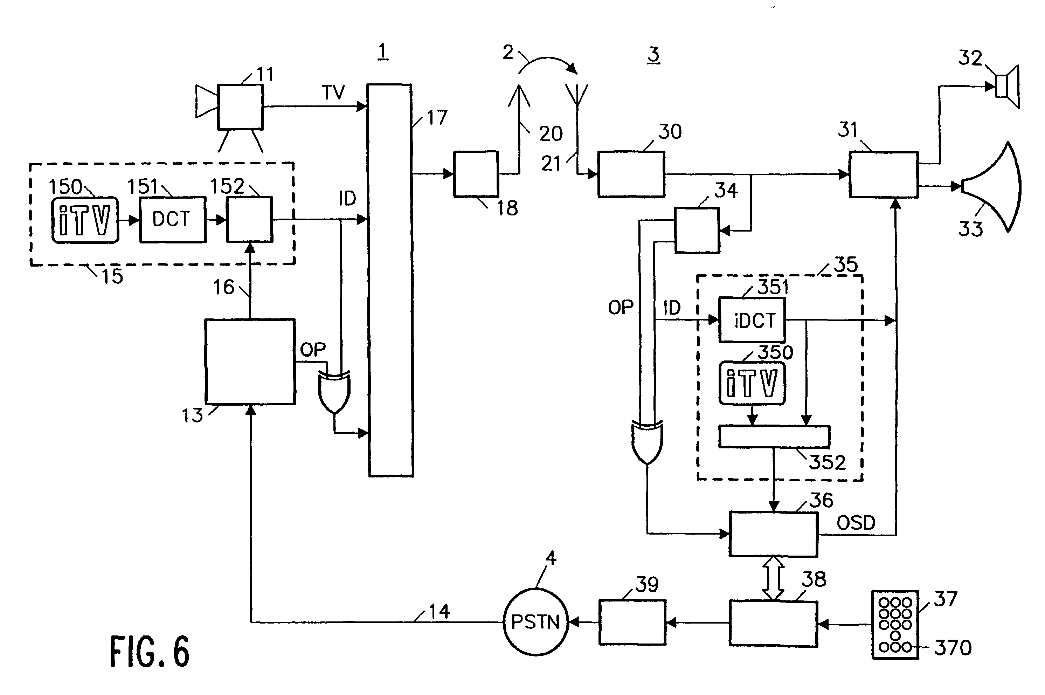

Fig.6 shows a further embodiment of the transmission system. This embodiment differs from the one shown in Fig. 1 in that the transmitter comprises an exclusive-OR circuit 41 for scrambling the operational signals, using the logo bit pattern as the scrambling key. The receiver comprises a corresponding exclusive-OR gate **42** for descrambling the received operational signals, using the received logo bit pattern. By means of this embodiment it is achieved that a receiver cannot operate without extracting the transmitted logo, i.e. paying royalty fees for decoding and offering a service for which such fees are due.

In the above-described examples, the picture logo ID is assumed to be continuously transmitted when an interactive television program is being broadcast. It will be appreciated that the picture logo may also be transmitted at regular time intervals, e.g. once per second. It may also take the form of a start signal and thus be transmitted only at the beginning of an interactive television program.

Further, the means for comparing the received and the stored logo have been shown as dedicated hardware circuitry. It will be appreciated that this comparison may also be carried out by the microprocessor **38** under the control of a stored program.

The invention also allows different logos to be transmitted for different types of operations or different receiver capabilities. One logo may define an interactive television program. Another logo may identify the transmission of a commercial accompanied by a home shopping service allowing the user to order a product and enter data such as desired color, size, etc. Different logos may further be used for activating different types of hardware. For example, transactions which involve debiting an amount of money from a smart card require the receiver to have a card reader in addition to the modem. The transmission of a specific logo for such a transaction enables the card reader to be activated. Receivers not having the card reader will not respond.

The invention can be summarized as follows. Television transmitters often transmit auxiliary operational signals to provide additional services in addition to the conventional television program. An example hereof is interactive television which allows the public to participate in a program, inter alia, by answering questions in a quiz show or voting for the best performance in a song contest. The operational signals identify actions to be taken by the receiver, such as sending the user's response to the transmitter through a modem. To inform the public that a particular service is being offered, the transmitter (1) transmits a logo (150) to indicate the transmission of the operational signals. The receiver (3) is equipped to receive the transmitted logo, compare (352) it with a locally stored logo (350) and process (36) the operational signals only if the transmitted and locally stored logos are perceptibly identical. The logo may be separately encoded or embedded in the conventional television signal. It is easily recognized by the public and thus precludes confusion in the user's mind as to whether or not his receiver has the addressed capabilities.

## Claims

1. A transmission system including a transmitter (1) and at least one receiver (3), the transmitter including means (15, 20) for transmitting operational signals for a predetermined operation mode of said receiver, and the receiver including means (36) for processing said operational signals in said operation mode, **characterised in that** the transmitter comprises means (15,20) for transmitting a logo to indicate the transmission of said operational signals, and that the receiver comprises means for receiving the logo(21, 35), comparing the received logo with a locally stored logo (352), enabling the predetermined operation mode only if the received and locally stored logos are perceptibly identical (36), and reproducing the logo at least in said operation mode (31).

2. A method of transmitting operational signals to a receiver (3) for a predetermined operation mode of said receiver, **characterised by** the step of transmitting a logo to indicate the transmission of said operational signals.

3. A method as claimed in claim 2, **characterised in that** the logo indicates the transmission format of the operational signals.

4. A method as claimed in claim 2, in which the operational signals are transmitted in addition to a conventional video or audio signal, **characterised in that** the logo is encoded separately from said conventional video or audio signal.

5. A method as claimed in claim 2, in which the operational signals are transmitted in addition to conventional video or audio signals, **characterised in that** the logo is part of said conventional video or audio signals.

6. A method as claimed in claim 2, **characterised in that** the operational signals are scrambled, using the encoded logo as the scrambling key.

7. A method as claimed in claim 2, **characterised in that** the logo indicates the transmission of an interactive television program.

8. A method of receiving operational signals from a transmitter (1) and processing said operational signals in a predetermined operation mode, **characterised by** the steps of receiving from said transmitter a logo indicating the transmission of said operational signals, comparing the received logo with a locally stored logo, enabling the predetermined operation mode only if the received and locally stored logos are perceptibly identical, and reproducing the logo at least in said operation mode.

9. A method as claimed in claim 8, **characterised in that** the logo indicates the transmission format of the operational signals.

10. A method as claimed in claim 8, in which the operational signals are received in addition to conventional video or audio signals and the logo is encoded separately from said conventional video or audio signal, **characterised by** the step of decoding the encoded logo.

11. A method as claimed in claim 8, in which the operational signals are received in addition to conventional video or audio signals and the logo is part of said conventional video or audio signals, **characterised by** the step of extracting the logo from said conventional video or audio signals.

12. A method as claimed in claim 8, **characterised in that** the logo indicates the transmission of an interactive television program.

13. A method as claimed in claim 8, in which the operational signals are scrambled, using the logo as the scrambling key, **characterised by** the step of descrambling the operational signals using the received logo.

14. A transmitter (1) for transmitting operational signals to a receiver (3) for a predetermined operation mode of said receiver, **characterised in that** the transmitter comprises means (15, 20) for transmitting a logo to indicate the transmission of said operational signals.

15. A receiver (3) for receiving operational signals from a transmitter (1) and processing said operational signals in said operation mode, **characterised in that** the receiver comprises means (21, 35) for receiving from said transmitter a logo indicating the transmission of said operational signals, and means (352) for comparing the received logo with a locally stored logo, enabling the predetermined operation mode only if the received and locally stored logos are perceptibly identical (36), and reproducing the logo at least in said operation mode (31).

16. A signal comprising a conventional signal for a receiver and further including operational signals for a predetermined operation mode of said receiver, **characterised by** a logo to indicate the presence in said signal of said operational signals.

17. A storage medium in which a signal as claimed in claim 16 has been stored.

## Patentansprüche

1. Übertragungssystem mit einem Sender (1) und wenigstens einem Empfänger (3), wobei der Sender Mittel (15, 20) aufweist zum Übertragen von Operationssignalen für eine vorbestimmte Betriebsart des genannten Empfängers, und wobei der Empfänger Mittel (36) aufweist zum Verarbeiten der genannten Operationssignale in der genannten Betriebsart, **dadurch gekennzeichnet, dass** der Sender Mittel (15, 20) aufweist zum Übertragen eines Logos um die Übertragung der genannten Operationssignale anzugeben, und dass der Empfänger Mittel aufweist zum Empfangen des Logos (21, 35), zum Vergleichen des empfangenen Logos mit einem örtlich gespeicherten Logo (352), zum Freigeben der vorbestimmten Betriebsart nur dann, wenn das empfangene und das örtlich gespeicherte Logo sichtbar identisch sind (36), und zum Wiedergaben des Logos wenigstens in der genannten Betriebsart (31).

2. Verfahren zum Übertragen von Operationssignalen zu einem Empfänger (3) für eine vorbestimmte Betriebsart des genannten Empfängers, **gekennzeichnet durch** den Verfahrensschritt der Übertragung eines Logos um die Übertragung des genannten Operationssignals anzugeben.

3. Verfahren nach Anspruch 2, **dadurch gekennzeichnet, dass** das Logo das Übertragungsformat der Operationssignale angibt.

4. Verfahren nach Anspruch 2, wobei die Operationssignale zusätzlich zu einem herkömmlichen Video- oder Audiosignal übertragen werden, **dadurch gekennzeichnet, dass** das Logo separat zu de3m genannten herkömmlichen Video- oder Audiosignal codiert wird.

5. Verfahren nach Anspruch 2, wobei die Operationssignale zusätzlich zu herkömmlichen Video- oder Audiosignalen übertragen werden, **dadurch gekennzeichnet, dass** das Logo ein Teil der genannten herkömmlichen Video- oder Audiosignale ist.

6. Verfahren nach Anspruch 2, **dadurch gekennzeichnet, dass** die Operationssignale verschlüsselt werden, wobei das codierte Logo als Verschlüsselungsschlüssel verwendet wird.

7. Verfahren nach Anspruch 2, **dadurch gekennzeichnet, dass** das Logo die Übertragung eines interaktiven Fernsehprogramms angibt.

8. Verfahren zum Empfangen von Operationssignalen von einem Sender (1) und zum Verarbeiten der genannten Operationssignale in einer vorbestimmten Betriebsart, **gekennzeichnet durch** die nachfolgenden Verfahrensschritte: das Empfangen eines Logos von dem genannten Sender, wobei dieses Logo die Übertragung der genannten Operationssignale angibt, das Vergleichen des empfangenen Logos mit einem örtlich gespeicherten Logo, wodurch die vorbestimmte Betriebsart erst dann möglich wird, wenn das empfangene und das örtlich gespeicherte Logo sichtbar identisch sind, und das Wiedergeben des Logos wenigstens in der genannten Betriebsart.

9. Verfahren nach Anspruch 8, **dadurch gekennzeichnet, dass** das Logo das Übertragungsformat der Operationssignale angibt.

10. Verfahren nach Anspruch 8, wobei die Operationssignale zusätzlich zu herkömmlichen Video- oder Audiosignalen empfangen werden und das Logo separat zu dem genannten herkömmlichen Video- oder Audiosignal codiert wird, **gekennzeichnet durch** den Verfahrensschritt der Decodierung des codierten Logos.

11. Verfahren nach Anspruch 8, wobei die Operationssignale zusätzlich zu herkömmlichen Video- oder Audiosignalen empfangen werden und das Logo ein Teil der genannten herkömmlichen Video- oder Audiosignale ist, **gekennzeichnet durch** den Verfahrensschritt der Extrahierung des Logos aus den genannten herkömmlichen Video- oder Audiosignalen.

12. Verfahren nach Anspruch 8, **dadurch gekennzeichnet, dass** das Logo die Übertragung eines interaktiven Fernsehprogramms angibt.

13. Verfahren nach Anspruch 8, wobei die Operationssignale verschlüsselt werden, und zwar unter Verwendung des Logos als Verschlüsselurigsschlüssel, **gekennzeichnet durch** den Verfahrensschritt der Entschlüsselung der Operationssignale unter Verwendung des empfangenen Logos.

14. Sender (1) zum Übertragen von Operationssignalen zu einem Empfänger (3) für eine vorbestimmte Betriebsart des genannten Empfängers, **dadurch gekennzeichnet, dass** der Sender Mittel (15, 20) aufweist zum Übertragen eines Logos um die Übertragung der genannten Operationssignale anzugeben.

15. Empfänger (3) zum Empfangen von Operationssignalen von einem Sender (1) und zum Verarbeiten der genannten Operationssignale in der genannten Betriebsart, **dadurch gekennzeichnet, dass** der Empfänger Mittel (21, 35) aufweist zum Empfangen eines Logos von dem genannten Sender, das die Übertragung der genannten Operationssignale angibt, und Mittel (352) zum Vergleichen des empfangenen Logos mit einem örtlich gespeicherten Logo, wodurch die vorbestimmte Betriebsart nur dann ermöglicht wird, wenn das empfangene und das örtlich gespeicherte Logo sichtbar identisch (36) sind, und zum Wiedergeben des Logos wenigstens in der genannten Betriebsart (31).

16. Signal mit einem herkömmlichen Signal für einen Empfänger und weiterhin mit Operationssignalen für eine vorbestimmte Betriebsart des genannten Empfängers, **gekennzeichnet durch** ein Logo um das Vorhandensein der genannten Operationssignale in dem genannten Signal anzugeben.

17. Speichermittel, in dem ein Signal nach Anspruch 16 gespeichert worden ist.

## Revendications

1. Système de transmission comprenant un émetteur (1) et au moins un récepteur (3), l'émetteur comprenant des moyens (15, 20) pour transmettre des signaux opérationnels pour un mode de fonctionnement prédéterminé dudit récepteur, et le récepteur comprenant un moyen (36) pour traiter lesdits signaux opérationnels dans ledit mode de fonctionnement, **caractérisé en ce que** l'émetteur comprend des moyens (15, 20) pour transmettre un logo afin de signaler la transmission desdits signaux opérationnels, et **en ce que** le récepteur comprend des moyens pour recevoir le logo (21, 35), comparer le logo reçu à un logo stocké localement (352), rendre possible le mode de fonctionnement prédéterminé seulement si les logos reçu et stocké localement sont sensiblement identiques (36), et reproduire le logo au moins dans ledit mode de fonctionnement (31).

2. Procédé de transmission de signaux opérationnels à un récepteur (3) pour un mode de fonctionnement prédéterminé dudit récepteur, **caractérisé par** l'étape de transmission d'un logo pour signaler la transmission desdits signaux opérationnels.

3. Procédé selon la revendication 2, **caractérisé en ce que** le logo indique le format de transmission des signaux opérationnels.

4. Procédé selon la revendication 2, dans lequel les signaux opérationnels sont transmis en plus d'un signal vidéo ou audio conventionnel, **caractérisé en ce que** le logo est codé séparément dudit signal vidéo ou audio conventionnel.

5. Procédé selon la revendication 2, dans lequel les signaux opérationnels sont transmis en plus de signaux vidéo ou audio conventionnels, **caractérisé en ce que** le logo fait partie desdits signaux vidéo ou audio conventionnels.

6. Procédé selon la revendication 2, **caractérisé en ce que** les signaux opérationnels sont embrouillés, en utilisant le logo codé comme clé d'embrouillage.

7. Procédé selon la revendication 2, **caractérisé en ce que** le logo signale la transmission d'un programme de télévision interactif.

8. Procédé de réception de signaux opérationnels provenant d'un émetteur (1) et de traitement desdits signaux opérationnels dans un mode de fonctionnement prédéterminé, **caractérisé par** les étapes de réception en provenance dudit émetteur d'un logo signalant la transmission desdits signaux opérationnels, de comparaison du logo reçu à un logo stocké localement, d'autorisation du mode de fonctionnement prédéterminé uniquement si les logos reçu et stocké localement sont sensiblement identiques, et de reproduction du logo au moins dans ledit mode de fonctionnement.

9. Procédé selon la revendication 8, **caractérisé en ce que** le logo indique le format de transmission des signaux opérationnels.

10. Procédé selon la revendication 8, dans lequel les signaux opérationnels sont reçus en plus de signaux vidéo ou audio conventionnels et le logo est codé séparément dudit signal vidéo ou audio conventionnel, **caractérisé par** l'étape de décodage du logo codé.

11. Procédé selon la revendication 8, dans lequel les signaux opérationnels sont reçus en plus de signaux vidéo ou audio conventionnels et le logo fait partie desdits signaux vidéo ou audio conventionnels, **caractérisé par** l'étape d'extraction du logo desdits signaux vidéo ou audio conventionnels.

12. Procédé selon la revendication 8, **caractérisé en ce que** le logo signale la transmission d'un programme de télévision interactif.

13. Procédé selon la revendication 8, dans lequel les signaux opérationnels sont embrouillés, en utilisant le logo codé comme clé d'embrouillage, **caractérisé par** l'étape de désembrouillage des signaux opérationnels au moyen du logo reçu.

14. Emetteur (1) pour transmettre des signaux opérationnels à un récepteur (3) pour un mode de fonctionnement prédéterminé dudit récepteur, **caractérisé en ce que** l'émetteur comprend des moyens (15, 20) pour transmettre un logo afin de signaler la transmission desdits signaux opérationnels.

15. Récepteur (3) pour recevoir des signaux opérationnels provenant d'un émetteur (1) et traiter lesdits signaux opérationnels dans ledit mode de fonctionnement, **caractérisé en ce que** le récepteur comprend des moyens (21, 35) pour recevoir dudit émetteur un logo signalant la transmission desdits signaux opérationnels, et un moyen (352) pour comparer le logo reçu à un logo stocké localement, rendre possible le mode de fonctionnement prédéterminé seulement si les logos reçu et stocké localement sont sensiblement identiques (36), et reproduire le logo au moins dans ledit mode de fonctionnement (31).

16. Signal comprenant un signal conventionnel pour un récepteur et comprenant en outre des signaux opérationnels pour un mode de fonctionnement prédéterminé dudit récepteur, **caractérisé par** un logo pour indiquer la présence dans ledit signal desdits signaux opérationnels.

17. Support de stockage dans lequel un signal selon la revendication 16 a été stocké.
